# FASCICULE DE BREVET EUROPEEN

(11) **EP 1 319 114 B1**
(45) Date de publication et mention de la délivrance du brevet: **09.03.2011**
(21) Numéro de dépôt: 01958304.6
(22) Date de dépôt: 31.08.2001
(51) Int. Cl.: E06B 9/82, G05B 19/19

(54) **PROCEDE DE COMMANDE D'UN MOTEUR ELECTRIQUE ENTRAINANT UN CORPS EN TRANSLATION**
VERFAHREN ZUR STEUERUNG EINES EINEN KÖRPER IN LINEARE RICHTUNG BEWEGENDEN, ELEKTRISCHEN MOTORS
METHOD FOR CONTROLLING AN ELECTRIC MOTOR DRIVING A BODY IN TRANSLATION

(30) Priorité: 15.09.2000 FR 0011812
(43) Date de publication de la demande: 18.06.2003
(73) Titulaire: Somfy SAS, 74300 Cluses (FR)
(72) Inventeur: CHERON, Eric, F-74440 Taninges (FR)
(74) Mandataire: Bugnion Genève
(86) Numéro de dépôt international: PCT/IB2001/001578
(87) Numéro de publication internationale: WO 2002/023005

(56) Documents cités:
- EP-A- 0 503 344
- DE-A- 4 331 781
- FR-A- 2 659 161
- US-A- 5 170 108
- US-A- 5 353 859
- US-A- 5 378 861

## Description

L'invention a pour objet un procédé de commande d'un moteur électrique entraînant un corps en translation entre une position initiale et une position finale déterminée par une butée, selon lequel on alimente le moteur à tension réduite dans la phase d'approche de la position finale.

L'invention a également pour objet un dispositif pour la mise en oeuvre de ce procédé.

L'invention concerne plus particulièrement les dispositifs d'occultation et de protection solaire tels que portes et stores vénitiens, stores à bras, etc.

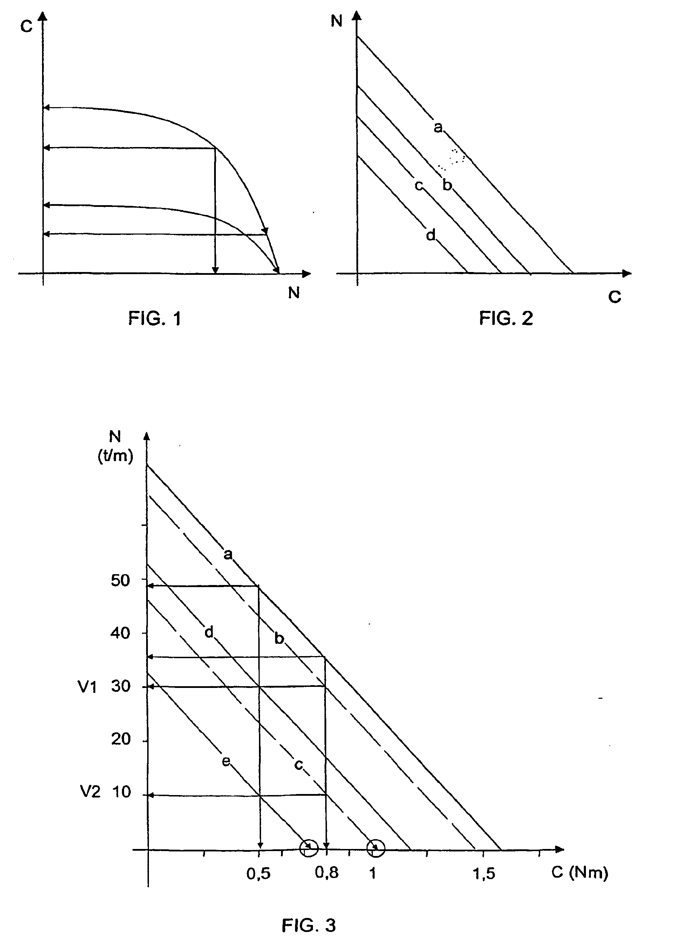

Un tel procédé et de tels dispositifs sont connus du brevet FR 2 717 016 au nom du demandeur. Dans ce brevet, il est enseigné d'ouvrir une phase d'alimentation particulière du moteur, en particulier de réduire la tension, dans la phase d'approche de la position finale déterminée par une butée. Cette phase d'alimentation particulière est obtenue au moyen d'un circuit électrique qui réduit le couple du moteur. Le moteur utilisé est un moteur asynchrone à condensateur dont la courbe de fonctionnement est représentée pour mémoire à la figure 1 du dessin annexé, dans laquelle le couple C est représenté en ordonnée et la vitesse N est représentée en abscisse. La figure 1 représente deux courbes pour deux tensions d'alimentation différentes, c'est-à-dire deux couples de butée différents. Ces courbes ont un point commun, la vitesse à vide, c'est-à-dire pour un couple égal à zéro. On remarque qu'une diminution du couple de butée entraîne également une diminution du couple disponible pour entraîner la charge. Ce procédé et le dispositif pour sa mise en oeuvre conviennent pour les installations dans lesquelles le couple résistant dû à la charge se réduit de lui-même avant l'ouverture de la phase d'alimentation particulière. C'est le cas des volets enroulables où l'influence du poids du volet diminue avec l'enroulement et pour les stores à bras dont l'effort nécessaire chute fortement une fois les bras déverrouillés et pour lesquels le couple, à cet instant, est en général faible et très peu influencé par le poids de la toile. Dans ce cas, il est possible d'utiliser un même circuit pour des volets roulants ou des stores à bras de poids différents. Pour certaines installations, le fait de ne pas pouvoir réduire le couple de butée sans réduire le couple disponible dans la phase d'approche, constitue un inconvénient important. C'est le cas des installations où le couple résistant reste sensiblement constant tout au long du déplacement du corps mobile, par exemple les installations de type store vénitien. Dans ce cas, la caractéristique du moteur doit être choisie de telle sorte que le couple sous charge soit voisin du couple de butée. Ceci nécessite une adaptation de la caractéristique de fonctionnement du moteur, c'est-à-dire du circuit de commande, voire du moteur lui-même, à chaque poids de corps entraîné.

L'invention a pour but de remédier à cet inconvénient, c'est-à-dire d'obtenir une adaptation automatique de la caractéristique de fonctionnement du moteur à la charge.

Le procédé selon l'invention est caractérisé en ce que l'on utilise un moteur dont la caractéristique couple/vitesse est telle que le couple à vitesse nulle diminue avec la tension d'alimentation, en ce qu'au début de la phase d'approche on détermine une tension réduite en diminuant la vitesse de rotation du moteur d'une valeur nominale à une valeur réduite prédéterminée et on coupe l'alimentation du moteur si la vitesse de rotation du moteur tombe en dessous d'une valeur de seuil prédéterminée.

Les moteurs présentant une telle caractéristique sont des moteurs très connus, tels que des moteurs à courant continu à excitation séparée, les moteurs sans balai et les moteurs universels. Avec, comme seule référence, la vitesse, on obtient ainsi, sans aucun artifice, une adaptation de la force de butée à la charge.

Il est certes connu, par exemple du brevet US 5,170,108, de contrôler la vitesse d'un moteur entraînant un store de type vénitien. Ce contrôle n'est toutefois effectué que pour maintenir la vitesse de déplacement du store dans une certaine plage et pour arrêter le moteur lorsque la vitesse tombe en dessous d'un minimum, cette chute étant interprétée comme un obstacle ou une butée.

Selon un mode préféré de mise en oeuvre du procédé, on maintient la tension réduire d'alimentation correspondant à la vitesse réduite prédéterminée tout au long de la phase d'approche. On se contente donc de réduire une fois la tension.

Selon un mode préféré de mise en oeuvre du procédé, pendant la phase d'approche de la position finale, on alimente le moteur à tension réduite en contrôlant la vitesse de manière à la maintenir à la valeur prédéterminée. De cette manière, dans la phase d'approche, on ajuste en permanence le couple à la charge résiduelle et on réduit d'autant le couple de butée.

Selon un mode préféré de mise en oeuvre du procédé, pendant la phase précédant la phase d'approche de la position finale, on alimente le moteur à une tension telle que la vitesse du moteur soit égale à une vitesse prédéterminée. De cette manière, la vitesse de déplacement du corps est sensiblement identique d'une installation à l'autre, quelque soit son poids.

L'invention a également pour objet un dispositif défini par la revendication 5.

Selon un mode d'exécution du dispositif, les moyens de mesure de la vitesse du moteur sont constitués d'un capteur délivrant des impulsions et l'ULT comprend des moyens de calcul de la position et de la vitesse du moteur, une mémoire dans laquelle est enregistré en permanence la position instantanée du moteur, des consignes de vitesse et de seuil et une consigne d'entrée en phase d'approche de la position finale, un programme de comparaison de la position et de la vitesse mesurée avec les consignes et des moyens pour générer un signal de commande de l'interface de puissante.

Selon un mode d'exécution préféré, l'interface de puissance est constituée d'une alimentation à découpage et l'ULT comprend un générateur d'impulsions et des moyens pour moduler ces impulsions en largeur, les impulsions modulées étant appliquées à l'alimentation à découpage.

Selon un mode d'exécution préféré, l'interface de puissance est constituée d'une alimentation stabilisée pilotée en fréquence et le signal de commande généré par l'ULT est un signal de fréquence variable.

Le procédé selon l'invention et ses moyens de mise en oeuvre seront décrits plus en détail en relation avec le dessin annexé dans lequel :

la figure: 2 représente schématiquement la caractéristique couple/vitesse du moteur utilisé dans le procédé selon l'invention, pour différentes tensions d'alimentation du moteur;

la figure 3 est un diagramme analogue à celui de la figure 2 comportant des valeurs illustrant le procédé selon l'invention;

la figure 4 est un schéma bloc d'un dispositif pour la mise en oeuvre du procédé dans son application à l'entraînement d'un store vénitien;

la figure 5 représente l'organigramme du programme de l'ULT selon un premier mode d'exécution du procédé et

la figure 6 représente l'organigramme de l'ULT selon un second mode d'exécution du procédé.

Dans le diagramme représenté à la figure 2, la droite a représente schématiquement l'allure de la caractéristique couple/vitesse, c'est-à-dire de la relation entre le couple et la vitesse pour une tension d'alimentation déterminée. Cette caractéristique est très approximativement une droite. La caractéristique se décale parallèlement à elle-même lorsque la tension d'alimentation varie. Les courbes b, c et d correspondent à trois tensions d'alimentation différentes, la tension d'alimentation allant en diminuant de la courbe a à la courbe d.

Dans la phase initiale on alimente le moteur à la tension nominale Un. La caractéristique correspondante du moteur est représentée par la courbe a à la figure 3.

Dans la phase d'alimentation particulière, c'est-à-dire la phase d'approche de la position finale, on diminue la tension d'alimentation du moteur jusqu'à ce que la vitesse du moteur soit égale à une valeur prédéterminée V2, par exemple 30 tours/mn. Comme on peut le voir à la figure 3, la caractéristique de fonctionnement du moteur à la vitesse V2, c'est-à-dire sa tension d'alimentation, varie avec la charge. Pour une charge de 0,8 Nm on se trouve sur la courbe c. Le couple de butée, c'est-à-dire le couple à la vitesse zéro, est sensiblement égal à 1 Nm.

Si, par exemple, la charge est égale à 0,5 Nm, on se trouve alors sur la courbe c et le couple en butée est sensiblement égal à 0,7 Nm. Ainsi, en réglant la vitesse au moyen de la tension et sans autre artifice, le couple en butée est automatiquement ajusté à la charge.

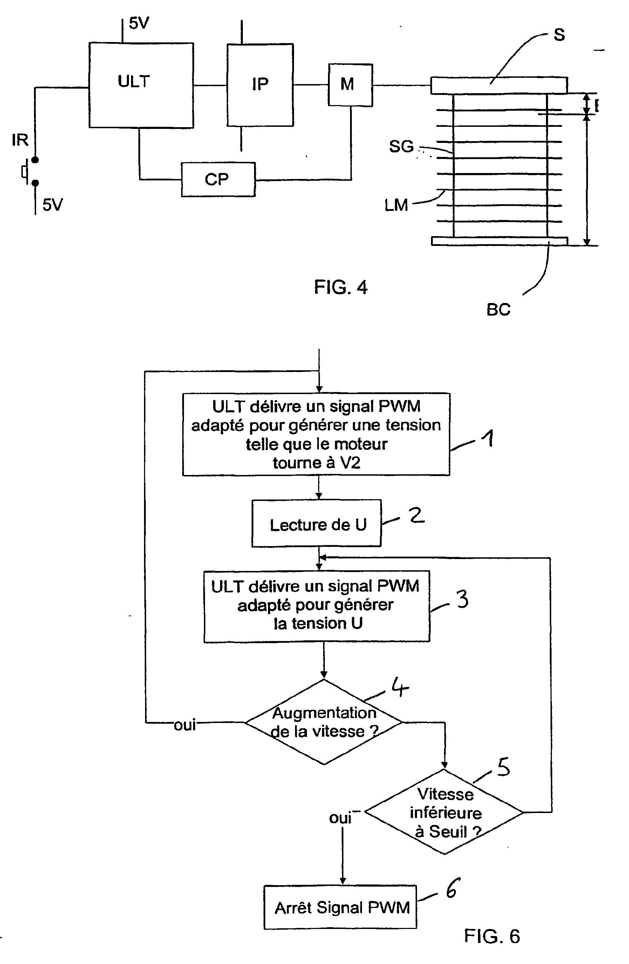

La figure 4 représente schématiquement l'application de l'invention à l'entraînement d'un store S de type store vénitien, c'est-à-dire comportant une barre de charge BC et des lamelles LM venant s'empiler en position relevée du store. Ce store est entraîné par un moteur M alimenté par l'intermédiaire d'une interface de puissance IP commandée par une unité logique de traitement ULT. Au moteur est associé un capteur de position CP par exemple un capteur à effet Hall relié à l'axe du moteur et délivrant des impulsions permettant de connaître à la fois la position de l'axe du moteur, c'est-à-dire la position de l'arbre d'enroulement des sangles SG du store et la vitesse du moteur. Les impulsions délivrées par le capteur sont traitées par l'ULT qui calcule la position du moteur et sa vitesse de rotation. L'ULT comporte une mémoire dans laquelle est enregistrée en permanence la position instantanée du moteur. Dans une phase d'apprentissage, la mémoire enregistre également des consignes de vitesse V1, V2 et de seuil ainsi que la consigne de position d'entrée en phase d'alimentation particulière. L'ULT est programmée pour comparer la vitesse calculée à partie des impulsions délivrées par le capteur à l'une ou l'autre des consignes de vitesse V1, V2 et de seuil et pour délivrer un signal PWM (impulsions modulées en largeur) à l'interface de puissance IP qui constitue une alimentation à découpage. L'ULT est également programmée pour comparer la position calculée à partir des impulsions délivrées par le capteur à la consigne de position enregistrée en mémoire.

Des générateurs PWM sont décrits en détail dans la publication "INTELLIGENT MOTION PROCEEDING" de juin 1993, pages 230 à 236, ainsi que dans les ouvrages "DESIGNERS' GUIDE TO POWER PRODUCTS" Application Manual, 2^{ème} édition juin 1992 de SGS-THOMSON microelectronics, pages 309 à 322, la publication "POWER SEMICONDUCTOR APPLICATIONS" de PHILIPS, pages 3-4 à 3-10 et la publication de SIEMENS "3-Phase Sine Wave Generation with the SAB 80C515A and SAB 80C17A" par Nikolaos Papadopoulos, Siemens Semiconductor Division, Rev. 2.0-e, 3/92.

Une commande de moteur par PWM est en outre décrite dans le brevet US 4,706,180.

L'installation est commandée par un interrupteur IR dont la fermeture est interprétée par l'ULT comme un ordre de déplacement.

A côté du store déroulé on a représenté schématiquement la phase initiale de déplacement A et la phase finale B c'est-à-dire la phase d'approche de la position d'accostage.

L'installation représentée à la figure 4 peut être réalisée d'une autre manière. Par exemple, l'interface de puissance pourrait être constituée d'une alimentation stabilisée, par exemple pilotée en fréquence. Dans ce cas, l'ULT délivrerait un signal de fréquence variable à l'alimentation stabilisée.

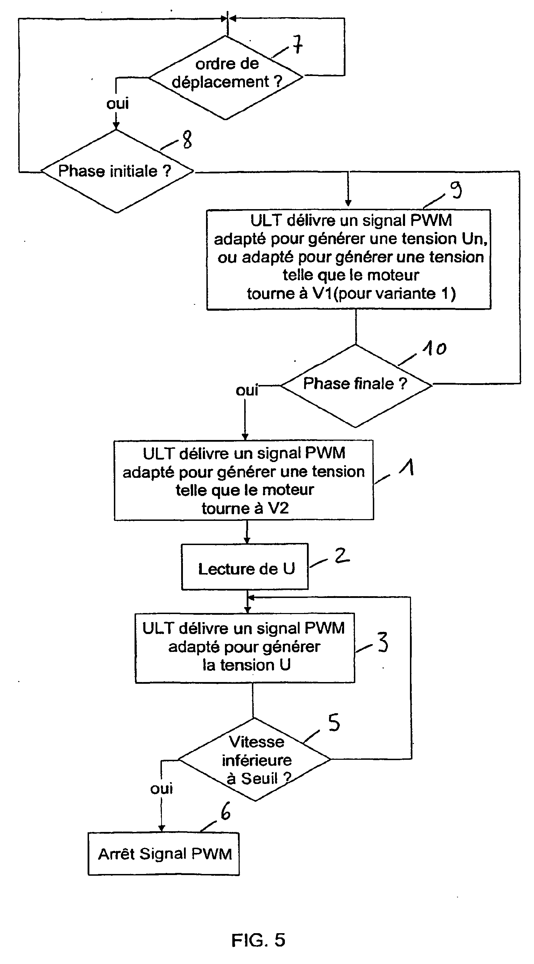

Dans sa programmation de base, l'ULT est programmée selon le logigramme de base représenté dans la moitié inférieure du logigramme de la figure 5.

Lorsqu'on entre en phase d'approche désignée à la figure 5 par la phase finale, l'ULT délivre un signal PWM adapté pour générer une tension telle que le moteur tourne à la vitesse V2 et délivre un signal PWM adapté pour générer une tension U. Cette tension est maintenue tout au long de la phase d'approche. L'ULT continue de tester la vitesse. Tant que cette vitesse est supérieure au seuil S, la tension U est maintenue. Lorsque la vitesse descend au-dessous du seuil prédéterminé, l'ULT cesse de délivrer le signal PWM et l'alimentation du moteur est coupée. La chute de la vitesse en dessous du seuil S signifie que la barre de charge du store est arrivée en butée.

Un premier perfectionnement du procédé est représenté par la partie supérieure du logigramme à la figure 5. Selon ce perfectionnement, dans la phase initiale, on alimente le moteur à une tension telle que la vitesse du moteur ait une valeur prédéterminée V1. De cette manière, la vitesse de déplacement du store est sensiblement identique d'une installation à l'autre quelque soit son poids. Dans le cas de plusieurs stores fonctionnant simultanément sur une même façade d'un bâtiment, on obtient, sans autre artifice, un mouvement d'ensemble coordonné et donc plus harmonieux des stores.

A la figure 3, les courbes b et d représentent des courbes caractéristiques correspondant à une tension d'alimentation du moteur telle que la vitesse V1 est égale à 30 tours/mn pour les charges de 0,8 Nm (b) et 0,5 Nm (d).

Un second perfectionnement est représenté à la figure 6 qui représente une modification du programme de base.

Comme dans le programme de base, lorsqu'on entre en phase finale, l'ULT délivre un signal PWM adapté pour générer une tension telle que le moteur tourne à la vitesse V2, puis lit la tension correspondante U et délivre un signal PW adapté pour générer cette tension U. Ensuite, contrairement au programme de base, on ne maintient pas cette tension U tout au long de la phase finale, mais l'ULT teste en permanence si la vitesse V2 est maintenue. Si la vitesse augmente, l'ULT réduit la tension d'alimentation U jusqu'à retrouver la vitesse V2. De cette façon, on ajuste en permanence le couple à la charge résiduelle et on réduit d'autant le couple de butée. Par ailleurs, en évitant une augmentation de vitesse dans la phase finale, on contribue à l'esthétique du mouvement du store. Une augmentation de la vitesse du store peut résulter d'une diminution de la charge due, par exemple, à l'effet du poids se déplaçant ou à la disparition d'un frottement ou encore à une surcharge passagère présente au moment de l'initialisation de la phase d'alimentation particulière.

Le procédé selon l'invention est applicable à tout corps se déplaçant en translation et dont le poids varie peu pendant le déplacement. C'est également le cas des portes rigides et des portes compensées. Le déplacement peut être horizontal ou vertical. Dans le cas d'un rideau rigide se déplaçant verticalement, le procédé est également applicable pour l'arrêt du rideau au point bas.

L'application préférentielle du procédé n'exclut pas son application dans le cas de variation du poids. Dans ce cas, l'avantage d'une force de butée réduite est également présent.

Références des textes contenus dans les dessins (figures 4 et 5)

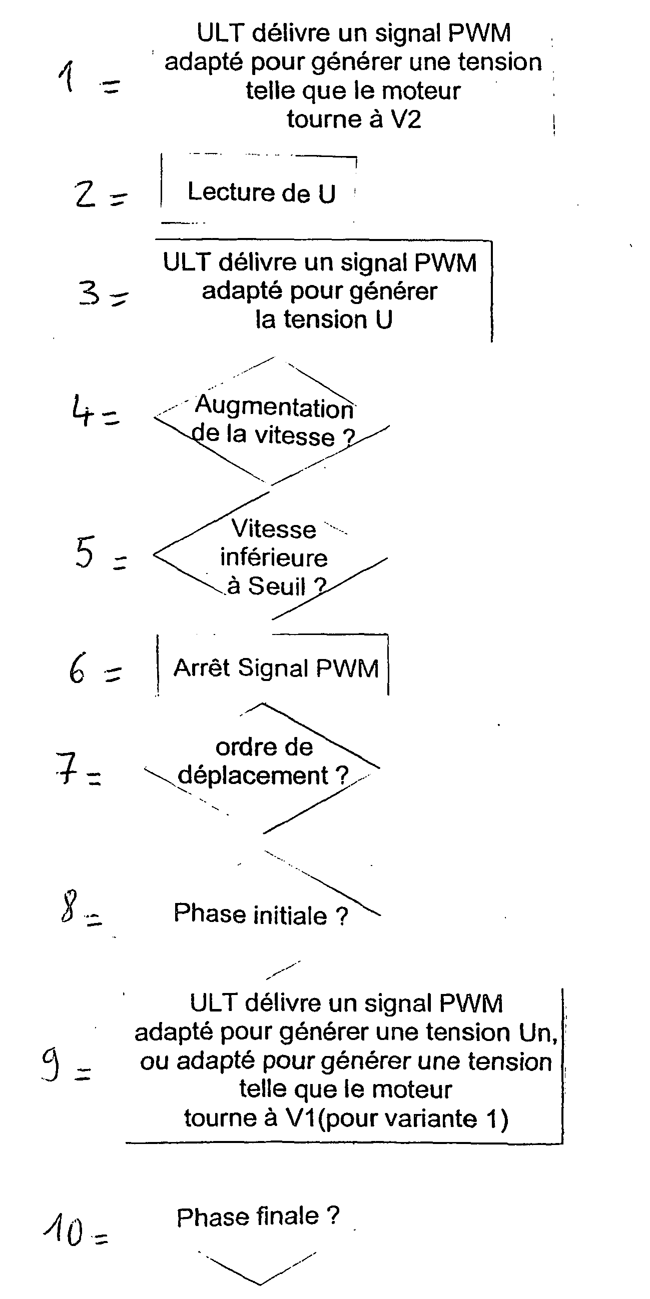

## Revendications

1. Procédé de commande d'un moteur électrique entraînant un corps en translation entre une position initiale et une position finale déterminée par une butée, selon lequel on alimente le moteur à tension réduite dans la phase d'approche de la position finale, **caractérisé en ce que** l'on utilise un moteur dont la caractéristique couple/vitesse est telle que le couple à vitesse nulle diminue avec la tension d'alimentation, **en ce qu'**au début de la phase d'approche on détermine une tension réduite en diminuant la vitesse de rotation du moteur d'une valeur nominale à une valeur réduite prédéterminée et on coupe l'alimentation du moteur si la vitesse de rotation du moteur tombe en dessous d'une valeur de seuil prédéterminée.

2. Procédé selon la revendication 1, **caractérisé en ce que** l'on maintient ladite tension réduite déterminée pendant la phase d'approche.

3. Procédé selon la revendication 1 ou 2, **caractérisé en ce que** l'on contrôle la variation de la vitesse de rotation du moteur pendant la phase d'approche et **en ce que**, si la vitesse de rotation augmente par rapport à sa valeur réduite prédéterminée, l'on réduit la tension d'alimentation du moteur pour ramener la vitesse de rotation du moteur à sa valeur réduite prédéterminée.

4. Procédé selon l'une des revendications précédentes, **caractérisé en ce que** l'on détermine une tension d'alimentation nominale du moteur dans une phase précédent la phase d'approche en amenant la vitesse du moteur à une vitesse nominale prédéterminée et **en ce que** l'on maintient cette tension nominale déterminée pendant la phase précédent la phase d'approche.

5. Dispositif pour la mise en oeuvre du procédé selon l'une des revendications 1 à 4 et destiné à commander un moteur électrique dont la caractéristique couple/vitesse est telle que le couple à vitesse nulle diminue avec la tension d'alimentation et entraînant un corps en translation entre une position initiale et une position finale déterminée par une butée, **caractérisé en ce qu'**il comprend des moyens de mesure de la vitesse du moteur (CP), une unité logique de traitement (ULT) et une interface de puissance ULT-moteur (IP) et **en ce qu'**il comprend un moyen apte à alimenter le moteur à tension réduite dans la phase d'approche de la position finale, un moyen apte à déterminer, au début de la phase d'approche, une tension réduite en diminuant la vitesse de rotation du moteur d'une valeur nominale à une valeur réduite prédéterminée et un moyen apte à couper l'alimentation du moteur si la vitesse de rotation du moteur tombe en dessous d'une valeur de seuil prédéterminée.

6. Dispositif selon la revendication 5, **caractérisé en ce que** les moyens de mesure de la vitesse du moteur sont constitués d'un capteur (CP) délivrant des impulsions et que l'ULT comprend des moyens de calcul de la position de la vitesse du moteur, une mémoire dans laquelle est enregistrée en permanence la position instantanée du moteur, des consignes de vitesses et de seuil et une consigne d'entrée en phase d'approche de la position finale, un programme de comparaison de la position et de la vitesse mesurée avec des consignes, et des moyens pour générer un signal de commande de l'interface de puissance.

7. Dispositif selon la revendication 6, **caractérisé en ce que** l'interface de puissance est constituée d'une alimentation à découpage et que l'ULT comprend un générateur d'impulsions et des moyens pour moduler ces impulsions en largeur, ces impulsions modulées étant appliquées à l'alimentation à découpage.

8. Dispositif selon la revendication 6, **caractérisé en ce que** l'interface de puissance est constituée d'une alimentation stabilisée et pilotée en fréquence et que le signal de commande généré par l'ULT est un signal de fréquence variable.

## Claims

1. Method for controlling an electric motor driving a body in translation between a starting position and an end position determined by a limit stop, wherein the motor is powered under reduced voltage during the phase of approach to the end position, **characterised in that** a motor is used whose torque-to-speed characteristic is such that the torque at zero speed decreases with falling supply voltage, wherein a reduced voltage is determined at the begin of the phase of approach, by reducing the rotational speed of the motor from a nominal value until a predetermined reduced value, and wherein the power supply of the motor is switched off if the rotational speed of the motor falls below a predetermined threshold value.

2. Method according to claim 1, **characterised in that** said determined reduced voltage is maintained during the phase of approach.

3. Method according to claim 1 or 2, **characterised in that** the change of the rotational speed of the motor during the phase of approach is controlled, and, **in that**, if the rotational speed increases with respect to its predetermined reduced value, the supply voltage of the motor is lowered in order to reset the rotational speed of the motor to its predetermined reduced value.

4. Method according to one of the preceding claims, **characterised in that** a nominal supply voltage of the motor is determined during a phase that precedes the phase of approach in bringing the speed of the motor to a predetermined nominal speed, and **in that** said determined nominal voltage is maintained during the phase preceding the phase of approach.

5. Device for implementing the method according to one of claims 1 to 4 and intended for controlling an electric motor having such a torque-to-speed characteristic that the torque at zero speed decreases with falling supply voltage, and driving a body in translation between a starting position and an end position determined by a limit stop, **characterised in that** it includes means for measuring the motor speed (CP); a logical processing unit (ULT); and a power interface (IP) ULT - motor, and **in that** it includes a means capable of supplying power to the motor under reduced voltage during the phase of approach to the end position; a means capable of determining, at the begin of the phase of approach, a reduced voltage by reducing the rotational speed of the motor from a nominal value until a predetermined reduced value; and a means capable of switched off the power supply of the motor if the rotational speed of the motor falls below a predetermined threshold value.

6. Device according to claim 5, **characterised in that** the means for measuring the motor speed are formed by a pulse delivering sensor (CP), and **in that** the ULT includes means for calculating the position and the speed of the motor; a memory in which the instantaneous position of the motor is permanently stored; setting values of speeds and a threshold as well as a setting value of the entry into the phase of approach to the end position; a software for comparing the measured position and speed with the setting values; and means for generating a control signal for the power interface.

7. Device according to claim 6, **characterised in that** the power interface is formed by a switch-mode power supply, and **in that** the ULT includes a pulse generator and means for a pulse width modulation, these modulated pulses being applied to the switch-mode power supply.

8. Device according to claim 6, **characterised in that** the power interface is composed of a stabilised and frequency controlled power supply, and **in that** the control signal generated by the ULT is a frequency variable signal.

## Patentansprüche

1. Verfahren zur Steuerung eines Elektromotors, welcher einen Körper für eine Linearbewegung zwischen einer Anfangsposition und einer durch einen Anschlag definierten Endposition antreibt, wobei der Motor bei der Phase der Annäherung an die Endposition mit verminderter Spannung gespeist wird, **dadurch gekennzeichnet, dass** ein Motor verwendet wird, dessen Charakteristik Moment/Geschwindigkeit derart beschaffen ist, dass das Moment bei der Geschwindigkeit Null mit der Speisespannung absinkt, und dass zu Beginn der Annäherungsphase eine verminderte Spannung **dadurch** bestimmt wird, dass die Umdrehungsgeschwindigkeit des Motors von einem Nennwert bis auf einen vorbestimmten Minderwert herabgesetzt wird, und dass die Speisung des Motors abgeschaltet wird, wenn die Umdrehungsgeschwindigkeit des Motors unter einen vorbestimmten Schwellenwert gesunken ist.

2. Verfahren nach Anspruch 1, **dadurch gekennzeichnet, dass** die genannte bestimmte verminderte Spannung während der Annäherungsphase beibehalten wird.

3. Verfahren nach Anspruch 1 oder 2, **dadurch gekennzeichnet, dass** die Änderung der Umdrehungsgeschwindigkeit des Motors während der Annäherungsphase geregelt wird, und dass die Speisespannung des Motors bei einer Erhöhung der Umdrehungsgeschwindigkeit in Bezug auf den vorbestimmten Minderwert herabgesetzt wird, um die Umdrehungsgeschwindigkeit des Motors wieder auf ihren vorbestimmten Minderwert zurückzubringen.

4. Verfahren nach einem der vorstehenden Ansprüche, **dadurch gekennzeichnet, dass** eine Nennspeisespannung des Motors während einer Phase bestimmt wird, welche der Annäherungsphase vorausgeht, indem die Motordrehzahl auf eine vorbestimmte Nenndrehzahl gebracht wird, und dass diese ermittelte Nenndrehzahl während der Phase beibehalten wird, welche der Annäherungsphase vorausgeht.

5. Vorrichtung zur Ausführung des Verfahrens nach einem der Ansprüche 1 bis 4, welche dazu bestimmt ist, einen Elektromotor anzusteuern, dessen Charakteristik Moment/Geschwindigkeit derart beschaffen ist, dass das Moment bei der Geschwindigkeit Null mit der Speisespannung absinkt, und wobei der Motor einen Körper für eine Linearbewegung zwischen einer Anfangsposition und einer durch einen Anschlag definierten Endposition antreibt, **dadurch gekennzeichnet, dass** die Vorrichtung Mittel zum Messen der Geschwindigkeit des Motors (CP), eine Logik-Verarbeitungseinheit (ULT) und eine Leistungsschnittstelle zwischen der ULT und dem Motor (IP) aufweist, dass sie ein Mittel enthält, das den Motor während der Annäherungsphase an die Endposition mit Minderspannung speisen kann, und weiterhin ein Mittel, welches die Speisung des Motors unterbrechen kann, wenn die Motordrehzahl unter einen vorbestimmten Schwellenwert gefallen ist.

6. Vorrichtung nach Anspruch 5, **dadurch gekennzeichnet, dass** die Mittel zum Messen der Geschwindigkeit des Motors aus einem Sensor (CP) bestehen, welcher Impulse liefert, und dass die ULT weiterhin Mittel zum Berechnen der Position und der Geschwindigkeit des Motors; einen Speicher, in dem dauernd die jeweilige Position des Motors gespeichert wird; die Vorgaben der Geschwindigkeiten und der Schwellenwerte und eine Vorgabe des Beginns der Annäherungsphase an die Endposition; ein Programm zum Vergleichen der gemessenen Position und Geschwindigkeit mit den Vorgaben; und Mittel zum Erzeugen eines Steuersignals der Leistungsschnittstelle enthält.

7. Vorrichtung nach Anspruch 6, **dadurch gekennzeichnet, dass** die Leistungsschnittstelle aus einer Schaltstromversorgung besteht, und dass die ULT einen Impulsgenerator sowie Mittel zur Pulsweitenmodulation aufweist, wobei diese modulierten Impulse an die Schaltstromversorgung angelegt werden.

8. Vorrichtung nach Anspruch 6, **dadurch gekennzeichnet, dass** die Leistungsschnittstelle aus einer stabilisierten und frequenzgesteuerten Stromversorgung besteht, und dass das von der ULT erzeugte Steuersignal ein Signal mit variabler Frequenz ist.
